# EUROPÄISCHE PATENTSCHRIFT

(11) **EP 0 900 997 B1**
(45) Veröffentlichungstag und Bekanntmachung des Hinweises auf die Patenterteilung: **29.10.2003**
(21) Anmeldenummer: 98115770.4
(22) Anmeldetag: 21.08.1998
(51) Int. Cl.: G01B 7/30, G01D 5/20, G01D 3/08

(54) **Induktiver Winkelsensor**
Inductive Angle Sensor
Capteur inductif de l'angle

(30) Priorität: 05.09.1997 DE 19738841
(43) Veröffentlichungstag der Anmeldung: 10.03.1999
(73) Patentinhaber: Hella KG Hueck & Co., 59552 Lippstadt (DE)
(72) Erfinder: Irle, Henning, 59557 Lippstadt (DE); Kost, Norbert, 59590 Geseke (DE); Schmidt, Franz-Josef, 33154 Salzkotten (DE)

(56) Entgegenhaltungen:
- DE-A- 4 411 759
- US-A- 4 940 939
- PATENT ABSTRACTS OF JAPAN vol. 97, no. 9, 30. September 1997 & JP 09 121585 A (MABUCHI MOTOR CO LTD), 6. Mai 1997

## Beschreibung

Die Erfindung betrifft einen induktiven Winkelsensor für ein Kraftfahrzeug.

Als Sensoren zur Positionserfassung, insbesondere zur Erfassung des Auslenkungswinkels von motorisch gesteuerten oder geregelten Elementen, kommen in Kraftfahrzeugen immer noch hauptsächlich Potentiometer zur Anwendung. Deren Vorteil, nämlich besonders kostengünstig zu sein, stehen die Nachteile der Verschmutzungsempfindlichkeit sowie der Verschleißbarkeit gegenüber.

Zur Vermeidung dieser Nachteile kommen nun verstärkt berührungslos arbeitende Winkelsensoren zur Anwendung, die z. B. nach magnetoresistiven, kapazitiven oder induktiven Prinzipien funktionieren.

Ein induktiver Winkelsensor besteht dabei dem Prinzip nach aus einer wechselstrombeaufschlagten Erregerspule, deren magnetisches Feld in einer oder mehreren Empfangsspulen Spannungen induziert, deren Amplitude oder Phasenlage von der Position eines relativ zu den Spulen beweglichen induktiven Koppelelementes abhängt.

Insbesondere bei sicherheitskritischen Anwendungen in Kraftfahrzeugen, wie z. B. der Erfassung der Winkelposition einer motorisch verstellbaren Drosselklappe, werden aus Sicherheitsgründen redundant messende Sensoren vorgesehen. Im Falle eines Potentiometers als Sensor kann ein redundant messender Sensor somit als einfaches Doppelpotentiometer ausgeführt sein.

Der Aufbau eines redundant messenden induktiven Winkelsensors ist dagegen problematisch, da es beim ortsnahen Aufbau zweier induktiver Sensorsysteme, und zwar insbesondere durch die Überlagerung der durch die Erregerspulen erzeugten Magnetfelder, zu einer gegenseitigen Beeinflussung der Sensorsysteme kommen kann.

Es sei angenommen, ein redundanter induktiver Winkelsensor bestehe, bis auf das induktive Koppelelement, dessen Positionierung erfaßt werden soll, aus zwei vollständigen und unabhängigen Sensorsystemen. Benutzt man hierzu zwei weitgehend identisch aufgebaute Sensorsysteme, also mit zwei Oszillatoren, welche die Erregerspulen mit einer Wechselspannung gleicher Frequenz beaufschlagen sollen, so erhält man bereits bei kleinsten Frequenzabweichungen Schwebungen in den Signalen der Empfangsspulen, welche die Auswertung der Empfangsspulensignale stark erschweren oder sogar unmöglich machen.

Ein denkbarer Ausweg wäre, die Oszillatorfrequenzen stark unterschiedlich zu wählen, so daß mögliche Differenzfrequenzen leicht auszufiltern wären. Dazu müßten aber der Oszillator und die Auswerteschaltung, die man vorteilhafterweise jeweils zu einem Schaltkreis zusammenfassen kann, für jedes der beiden Sensorsysteme anders ausgelegt sein, was einen doppelten Entwicklungsaufwand bedeutet. Auch wären die Kosten zur Produktion zweier verschiedener Schaltkreise in einfacher Stückzahl weitaus höher als die Produktion eines Schaltkreises in doppelter Stückzahl.

Es ist daher die Aufgabe der Erfindung, einen redundant aufgebauten induktiven Winkelsensor zu schaffen, der möglichst einfach und kostengünstig herstellbar ist und eine gegenseitige störende Beeinflussung der Sensorsysteme ausschließt.

Diese Aufgabe wird erfindungsgemäß durch die kennzeichnenden Merkmale des Anspruches 1 gelöst. Vorteilhafte Ausgestaltungen und Weiterbildungen hierzu sind in den Merkmalen der abhängigen Ansprüche angeführt.
Die Idee der Erfindung beruht darauf, zwei Oszillatoren vorzusehen, die als LC-Oszillatoren ausgeführt und über die Erregerspulen miteinander gekoppelt sind. LC-Oszillatoren können "weich" ausgeführt sein, das heißt über einen gewissen Frequenzbereich verstimmbar sein, ohne daß ihr Schwingungsverhalten instabil würde oder die Schwingungen gar abreißen würden.

Durch die Kopplung der beiden Oszillatoren schwingen diese auf gleicher Frequenz und Phasenlage, wodurch insbesondere störende Schwebungen auf überraschend einfache Weise vermieden werden können.

Vorteilhaft ist zudem, daß LC-Oszillatoren sehr kostengünstig sind, da die Erregerspulen zugleich die Induktivitäten der LC-Schwingkreise ausbilden und überdies auf zusätzliche frequenzstabilisierende Mittel (Quarze) verzichtet werden kann.

Vorteilhaft ist weiterhin, daß der "Ziehbereich" der Frequenz der Oszillatoren durch die Dimensionierung der Oszillatorbauteile vorgegeben werden kann. Insbesondere durch den dissipativen Anteil der verwendeten Bauelemente können die Gütefaktoren der Oszillatoren so gering vorgegeben werden, daß die Oszillatoren bei einer extern beeinflußten Änderung ihrer Schwingungsfrequenz innerhalb eines Abweichungsbereiches von mindestens +/- 1 kHz von der Grundfrequenz noch stabil arbeiten.

Durch die gegenseitige Kopplung der Oszillatoren über die Erregerspulen ist es nicht nur möglich, sondern sogar zweckmäßig, beide Erregerspulen in räumlicher Nähe zueinander, und zwar vorteilhafterweise auf einer Leiterplatte, anzuordnen.

Die einzelnen Erregerspulen können hierzu beispielsweise durch spiralförmige oder auch konzentrische Leiterbahnen ausgeführt sein und zueinander konzentrisch angeordnet werden.

Des weiteren ist es zweckmäßig, als Leiterplatte eine mehrlagige Leiterplatte vorzusehen, auf der auch die ebenfalls als Leiterbahnen ausgeführten Empfangsspulen sowie die Schaltkreise zur Schwingungserzeugung und zur Signalauswertung angeordnet sind.

Vorteilhaft ist es, die beiden Sensorsysteme zwar induktiv gekoppelt, aber galvanisch getrennt auszuführen, so daß bei Ausfall eines Sensorsystems das zweite voll funktionsfähig bleibt. Dies führt zu der zweckmäßigen Ausgestaltung, alle elektrischen Komponenten, bis auf die Erreger- und Empfangsspulen, zu jeweils einem Schaltkreis zusammenzufassen. Da durch die erfindungsgemäße Ausgestaltung des induktiven Winkelsensors zweimal der gleiche Schaltkreis zur Anwendung kommen kann, ist dieser in höheren Stückzahlen, und damit besonders kostengünstig, herstellbar.

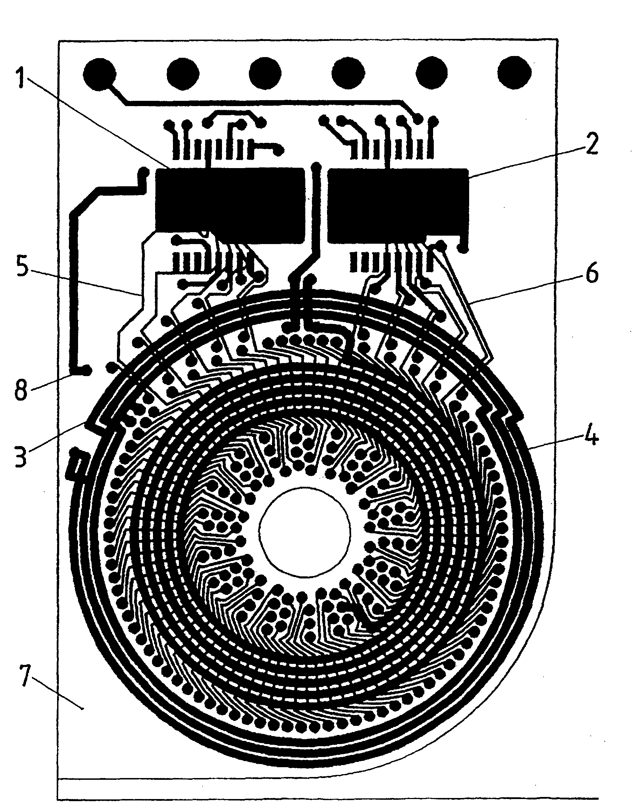

Ein Ausführungsbeispiel eines erfindungsgemäßen induktiven Winkelsensors soll nachfolgend anhand der Zeichnung dargestellt und näher erläutert werden.

Hierzu zeigt die einzige Figur eine Skizze der zum induktiven Winkelsensor gehörenden Leiterplatte.

Da die Figur nur eine Ebene einer mehrlagigen Leiterplatte (7) darstellt, sind nicht alle nachfolgend genannten elektrischen Verbindungen in der Figur unmittelbar ersichtlich, da diese vielfach über Durchkontaktierungen (8) (dargestellt durch die punktförmigen Elemente an den Leiterbahnendungen) zwischen den Leiterplattenebenen hergestellt werden. Für die Erläuterung des nachfolgend beschriebenen Aufbauprinzips des erfindungsgemäßen induktiven Winkelsensors ist dies jedoch unerheblich.

Ebenfalls nicht dargestellt ist das induktive Koppelelement, ausführbar als metallisches Element, Kurzschlußspule oder ähnliches, dessen Winkelposition bezüglich der Spulenanordnung auf der Leiterplatte vom Winkelsensor detektiert wird.

Der induktive Winkelsensor besteht aus zwei galvanisch unabhängigen, jedoch induktiv gekoppelten Sensorsystemen. Jedes Sensorsystem besteht aus jeweils einem integrierten Schaltkreis (1, 2) und einer Erregerspule (3, 4) sowie mehreren Empfangsspulen, die auf verschiedenen Leiterplattenebenen in Umfangsrichtung der kreisförmigen Leiterbahnanordnung periodische (z. B. mäanderförmige, dreieckförmige) Strukturen ausbilden. Die Verbindungsleitungen (5, 6) dieser im übrigen nicht dargestellten Empfangsspulen (im dargestellten Beispiel sind es fünf pro Sensorsystem) sind zu den Schaltkreisen (1, 2) geführt, welche jeweils eine Auswerteschaltung zur Auswertung der Empfangsspulensignale enthält.

Aus den verschiedenen Amplitudenwerten und Phasenlagen der Empfangsspulensignale bestimmt die Auswerteschaltung die genaue Winkelposition des induktiven Koppelelementes.

In die Schaltkreise (1, 2) integriert sind zudem die Oszillatorschaltungen, welche die Erregerspulen (3, 4) jeweils mit einem Wechselstrom beaufschlagen. Diese sind erfindungsgemäß als "weiche" LC-Oszillatoren ausgeführt, deren Schwingungsfrequenz durch äußere Beeinflussung über einen vorgegebenen Frequenzbereich verändert werden kann, ohne daß dieses zu einem instabilen Schwingungsverhalten oder gar zu einem Schwingungsabriß führen würde

Die induktive Komponente jedes LC-Oszillators wird durch die zugeordnete Erregerspule (3, 4) gebildet. Durch die räumlich nahe Anordnung der Erregerspulen (3, 4) erfahren die Oszillatoren so eine induktive Kopplung, welche eine frequenz- und phasengleiche Schwingung beider Oszillatoren bewirkt. Dabei kann die gemeinsame Schwingungsfrequenz durchaus von den Frequenzen abweichen, die jeder einzelne der Oszillatoren unbeeinflußt erzeugen würde.

Der induktive Winkelsensor löst damit das Problem, daß auch frequenzgenaue Oszillatoren geringfügige Abweichungen von der vorgegebenen Grundfrequenz zeigen. Erzeugen nun zwei frequenzstarre Oszillatoren, z. B. Quarzoszillatoren, Wechselfelder mit nur annähernd gleicher Frequenz, so ergeben sich unerwünschte Effekte, insbesondere Schwebungen, mit der Differenzfrequenz der beiden Oszillatoren, welche die Auswertung der Winkelposition des induktiven Koppelelementes aus den von den Empfangsspulen abgegebenen Signalen erschwert oder gar unmöglich macht.

Ein, allerdings weniger vorteilhafter, Ausweg wäre hier, Oszillatoren mit deutlich unterschiedlichen Schwingungsfrequenzen vorzusehen, so daß die Differenzfrequenzen nicht störend oder leicht ausfilterbar wären. Da hierzu aber die Schaltkreise sowohl zur Schwingungserzeugung als auch zur Signalauswertung untereinander deutlich verschiedenartig ausgeführt sein müßten, wäre diese Lösung erheblich aufwendiger.

Eine andere Lösung könnte sein, nur einen Oszillator vorzusehen, der beide Erregerspulen ansteuert. Diese Lösung entspricht aber nicht der Anforderung, einen vollständig redundanten Winkelsensor zu schaffen, der zwei unabhängig voneinander funktionierende Sensorsysteme aufweist. Bei nur einem Oszillator bedeutet ein Ausfall desselben auch einen Funktionsausfall des gesamten Winkelsensors.

Daher erscheint der erfindungsgemäße Winkelsensor mit zwei sich selbst synchronisierenden Oszillatoren sowohl hinsichtlich Aufwand als auch unter dem Gesichtspunkt der Funktionssicherheit als besonders vorteilhaft.

### Bezugszeichenliste

- 1, 2: Schaltkreise
- 3, 4: Erregerspulen
- 5, 6: Verbindungsleitungen (der Empfangsspulen zu den Schaltkreisen)
- 7: (mehrlagige) Leiterplatte
- 8: Durchkontaktierungen

## Patentansprüche

1. Induktiver Winkelsensor für ein Kraftfahrzeug
- mit zwei Oszillatoren mit zumindest annähernd gleicher Schwingungsfrequenz,
- mit jeweils mindestens einer jedem Oszillator zugeordneten Erregerspule (3, 4),
- mit jeweils mindestens einer jedem Oszillator zugeordneten Empfangsspule
- und mindestens einem induktiven Koppelelement,
- wobei die Oszillatoren als LC-Schwingkreise ausgeführt sind und über die Erregerspulen (3, 4) miteinander induktiv gekoppelt sind.

2. Induktiver Winkelsensor nach Anspruch 1, **dadurch gekennzeichnet, daß** der Gütefaktor der Oszillatoren so gering vorgegeben ist, daß die Oszillatoren bei einer extern beeinflußten Änderung ihrer Schwingungsfrequenz innerhalb eines Abweichungsbereiches von mindestens +/- 1 kHz von der Grundfrequenz stabil arbeiten.

3. Induktiver Winkelsensor nach Anspruch 1, **dadurch gekennzeichnet, daß** jeweils ein Oszillator, mit Ausnahme der zugehörigen Erregerspule, sowie eine mit den dem Oszillator zugeordneten Empfangsspulen verbundene Auswerteschaltung zu einem Schaltkreis (1, 2) zusammengefaßt sind und daß der induktive Winkelsensor zwei gleichartig aufgebaute Schaltkreise (1, 2) aufweist.

4. Induktiver Winkelsensor nach den Ansprüchen 1 und 3, **dadurch gekennzeichnet, daß** die Erregerspulen (3, 4), die Empfangsspulen sowie die Schaltkreise (1, 2) auf einer mehrlagigen Leiterplatte (7) angeordnet sind.

5. Induktiver Winkelsensor nach Anspruch 4, **dadurch gekennzeichnet, daß** die Erregerspulen (3, 4) jeweils als spiralförmige oder konzentrische Leiterbahnen ausgebildet sind und daß die Erregerspulen (3, 4) konzentrisch zueinander angeordnet sind

## Claims

1. Inductive angle sensor for a vehicle
- with two oscillators having approximately the same oscillation frequency,
- with, in each case, at least one exciter winding (3, 4) associated with each oscillator,
- with, in each case, a receiving coil associated with each oscillator
- and at least one inductive coupling member,
- whereby the oscillators are implemented as LC-oscillatory circuits and are inductively coupled to each other by means of the exciter windings (3, 4).

2. Inductive angle sensor in accordance with claim 1, **characterized in that** the quality factor of the oscillators is set to be so slight that, where there is an externally influenced change in their frequency of oscillation, the oscillators operate within a range of +/- 1 kHz of the basic frequency.

3. Inductive angle sensor in accordance with claim 1, **characterized in that**, in each case, one oscillator, with the exception of the associated exciter winding, and an analysis circuit connected to the receiving coils associated with the oscillator, are combined to form a switch circuit (1, 2) and **in that** the inductive angle sensor has two identically structured switch circuits (1, 2).

4. Inductive angle sensor in accordance with claims 1 and 3, **characterized in that** the exciter windings (3, 4), the receiving coils and the switch circuits (1, 2) are disposed on a multi-layered printed circuit board (7).

5. Inductive angle sensor in accordance with claim 4, **characterized in that** the exciter windings (3, 4) are in each case formed as spiral or concentric conduction paths and **in that** the exciter windings (3, 4) are arranged concentrically in relation to each other.

## Revendications

1. Capteur angulaire inductif pour un véhicule automobile, comportant
- deux oscillateurs avec des fréquences d'oscillation au moins presque égales,
- au moins une bobine d'excitation (3, 4) associée à chaque oscillateur,
- au moins une bobine réceptrice associée à chaque oscillateur,
- et au moins un élément de couplage inductif,
- les oscillateurs étant réalisés sous forme de circuits oscillants LC et étant couplés l'un à l'autre par induction via les bobines d'excitation (3, 4).

2. Capteur angulaire inductif selon la revendication 1, **caractérisé en ce que** le facteur de qualité des oscillateurs est prédéterminé si faible que les oscillateurs travaillent de manière stable en cas d'une modification influencée depuis l'extérieur, de leur vitesse d'oscillation à l'intérieur d'une plage de déviation d'au moins +/- 1 kHz de la fréquence de base.

3. Capteur angulaire inductif selon la revendication 1, **caractérisé en ce qu'**un oscillateur respectif, à l'exception de la bobine d'excitation associée, ainsi qu'un circuit d'évaluation relié aux bobines réceptrices associées à l'oscillateur sont réunis en un circuit de commutation (1, 2) et **en ce que** le capteur angulaire inductif présente deux circuits de commutation (1, 2) de structure similaire.

4. Capteur angulaire inductif selon la revendication 1 et 3, **caractérisé en ce que** les bobines d'excitation (3, 4), les bobines réceptrices ainsi que les circuits de commutation (1, 2) sont agencés sur une carte à circuits imprimés (7) multicouches.

5. Capteur angulaire inductif selon la revendication 4, **caractérisé en ce que** les bobines d'excitation (3, 4) sont réalisées chacune sous forme de pistes conductrices en forme de spirale ou concentriques et **en ce que** les bobines d'excitation (3, 4) sont agencées concentriquement l'une par rapport à l'autre.
